# EUROPEAN PATENT APPLICATION

(11) **EP 4 757 013 A1**
(43) Date of publication of application: **10.06.2026**
(21) Application number: 25220703.0
(22) Date of filing: 04.12.2025
(51) Int. Cl.: H01M 50/107, H01M 50/152, H01M 50/213, H01M 50/342, H01M 50/627

(54) **BATTERY CELL AND BATTERY MODULE INCLUDING THE SAME**

(30) Priority: 05.12.2024 KR 20240179808; 10.04.2025 KR 20250046995
(71) Applicant: SK On Co., Ltd., Seoul 03161 (KR)
(72) Inventor: CHOI, Yang Kyu, 34124 Daejeon (KR); JU, Seung Hoon, 34124 Daejeon (KR); PAK, Byeong Jun, 34124 Daejeon (KR); LEE, Dong Hyee, 34124 Daejeon (KR)
(74) Representative: Prüfer & Partner mbB Patentanwälte · Rechtsanwälte

(57) **Abstract**

A battery cell according to an embodiment of the present disclosure includes a cell case having a can accommodating an electrode assembly therein and a cap plate connected to the can, and a vent notch formed in at least one of both surfaces of the cap plate, wherein the vent notch includes at least one first notch portion formed based on a first path, at least one second notch portion formed based on a second path, and a connection notch portion connecting the first notch portion and the second notch portion.

## Description

### BACKGROUND

### 1. FIELD

The present disclosure relates to a battery cell and a battery module including the same.

### 2. DESCRIPTION OF RELATED ART

A secondary battery is a means of energy storage that can be charged and discharged. A secondary battery is widely used in various means using electricity as a power source. For example, a secondary battery is used as a means of energy storage in various devices ranging from small devices such as mobile phones, laptops, and tablets to large devices such as vehicles and aircraft. In particular, in recent years, the use of secondary battery as a vehicle power source has been actively sought.

A secondary battery may be classified as a lead acid battery, a nickel cadmium battery, a nickel hydrogen battery, a lithium ion battery, or the like, depending on the material of electrodes. The secondary battery for each type may be appropriately selected depending on capacitance design, usage environment, and the like. A lithium-ion battery may achieve relatively high voltage and capacitance, as compared to other types of secondary batteries. Accordingly, a lithium-ion battery is widely used in a field requiring a means of high-density energy storage, such as a battery pack for a vehicle, or the like.

A secondary battery, such as a lithium-ion battery, or the like, mainly includes a positive electrode material, a negative electrode material, a separator, and an electrolyte. The cathode and anode materials are disposed with a separator formed of an insulating material interposed therebetween, and charging or discharging thereof may be performed due to the movement of ions through the electrolyte.

### SUMMARY

According to an aspect of the present disclosure, a battery cell having an improved vent notch, and a battery module including the same, may be provided.

The battery cell of the present disclosure and the battery module including the same may be widely applied to devices within green technology fields such as electric vehicles, battery charging stations, and solar and wind power generation using batteries.

In addition, the battery cell of the present disclosure and the battery module including the same may be used in eco-friendly electric vehicles, hybrid vehicles, etc. to prevent climate change by suppressing air pollution and greenhouse gas emissions.

According to an embodiment of the present disclosure, a battery cell may include a cell case having a can accommodating an electrode assembly therein and a cap plate connected to the can, and a vent notch formed in at least one of both surfaces of the cap plate, wherein the vent notch may include at least one first notch portion formed based on a first path, at least one second notch portion formed based on a second path, and a connection notch portion connecting the first notch portion and the second notch portion.

The first path may be provided to be spaced apart from the outside of the second path.

The first path and the second path may be provided to have different separation distances from a center of the cap plate.

The first path and the second path may be provided to have different separation distances from a connection portion of the cap plate and the can.

The first path may be a path formed along a virtual first circle, and the second path may be a path formed along a virtual second circle.

A first radius of the first circle may be provided to be larger than a second radius of the second circle.

A first center of the first circle and a second center of the second circle may be provided to be the same.

The first notch portion and the second notch portion may be formed in a region of the cap plate, which is larger than 40 percent of a radius of the cap plate, and smaller than the radius of the cap plate.

A length of the second notch portion may be provided to be shorter than a length of the first notch portion.

The cap plate may include an injection port for injecting an electrolyte into the interior of the cell case.

The cap plate may include a forming portion formed by being partially recessed.

The forming portion may be provided in plural, and the plurality of forming portions may be disposed symmetrically with respect to the center of the cap plate.

The vent notch may be provided so that at least a portion thereof opens in a different shape than other portions based on a magnitude of a change in preset pressure.

In the vent notch, the second notch portion may be ruptured before the first notch portion.

The cap plate may include a holding portion, which is provided to be thicker than the first notch portion and the second notch portion in at least one portion of the first notch portion and the second notch portion.

According to an embodiment of the present disclosure, a battery module includes a plurality of battery cells and a module housing accommodating the plurality of battery cells, wherein at least one of the plurality of battery cells may include a cell case having a side wall forming an accommodating space for accommodating an electrode assembly therein, a cap plate connected to one side of the side wall, and a vent notch formed in at least one of both surfaces of the cap plate, wherein the vent notch may include at least one first notch portion formed based on a first path, at least one second notch portion formed based on a second path, and a connection notch portion connecting the first notch portion and the second notch portion.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view of a battery cell according to an embodiment of the present disclosure;
FIG. 2 is an exploded perspective view of a battery cell according to an embodiment of the present disclosure;
FIG. 3 is a cross-sectional view taken along line I-I' of Figure 1.
FIG. 4 is a plan view of a cap plate according to an embodiment of the present disclosure;
FIG. 5 is a cross-sectional view taken along line II-II' of a cap plate according to an embodiment of the present disclosure;
FIG. 6 is a cross-sectional view taken along line III-III' of a cap plate according to an embodiment of the present disclosure;
FIG. 7 is a cross-sectional view taken along line II-II' of a cap plate according to an embodiment of the present disclosure when gas is generated inside a battery cell;
FIG. 8 is a cross-sectional view taken along line III-III' of a cap plate according to an embodiment of the present disclosure when gas is generated inside a battery cell;
FIG. 9 is a diagram exemplarily illustrating a region in which a first path and a second path are formed according to an embodiment of the present disclosure;
FIG. 10 is a plan view of a cap plate according to an embodiment of the present disclosure;
FIG. 11 is a plan view of a cap plate according to an embodiment of the present disclosure;
FIG. 12 is a cross-sectional view taken along line IV-IV' of a cap plate according to an embodiment of the present disclosure;
FIGS. 13A, 13B, 13C, and 13D are cross-sectional views illustrating various shapes of vent notches according to an embodiment of the present disclosure;
FIGS. 14A and 14B are diagrams illustrating various shapes of vent notches according to an embodiment of the present disclosure;
FIG. 15 is a graph illustrating a change in pressure depending on operating conditions according to an embodiment of the present disclosure; and
FIG. 16 is a perspective view of a battery module according to an embodiment of the present disclosure.

### DETAILED DESCRIPTION

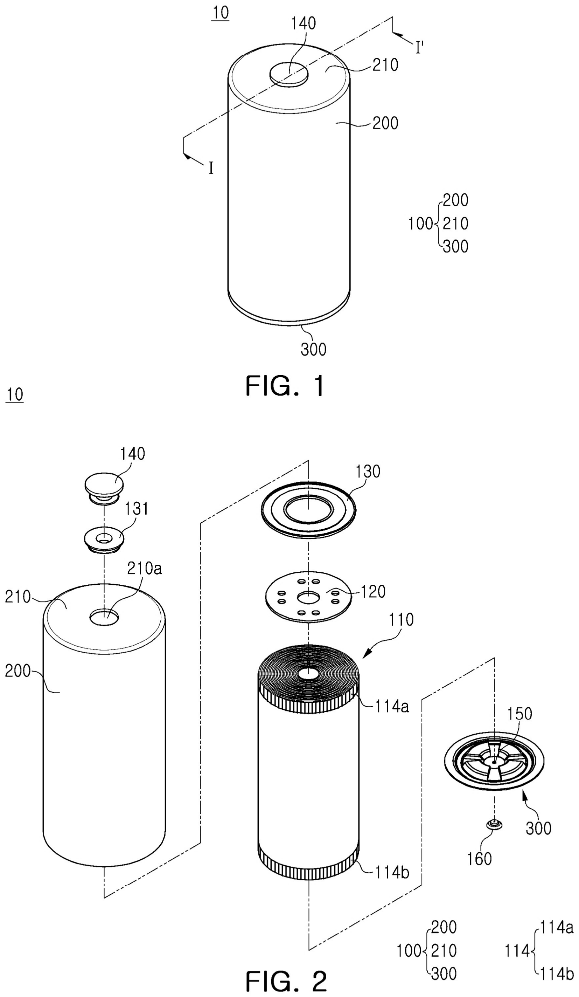

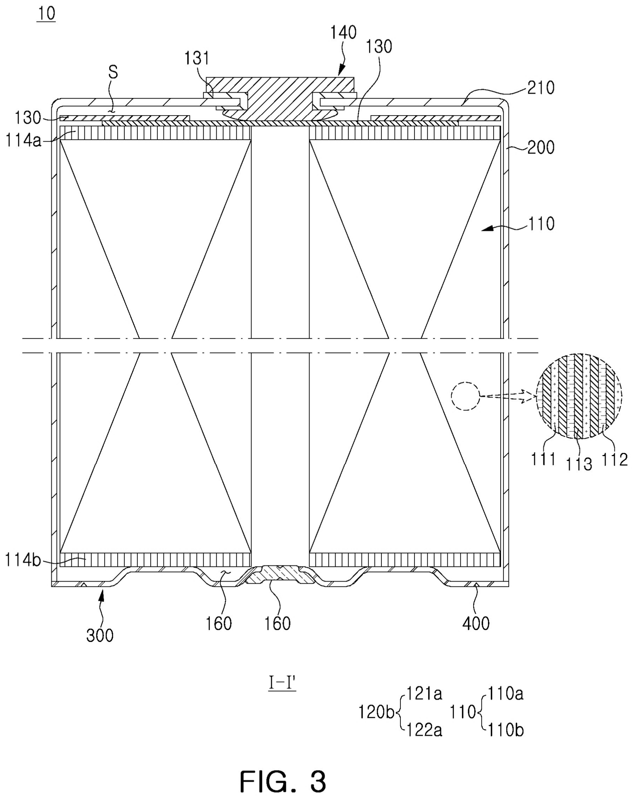

FIG. 1 is a perspective view of a battery cell 10 according to an embodiment of the present disclosure, FIG. 2 is an exploded perspective view of a battery cell according to an embodiment of the present disclosure, and FIG. 3 is a cross-sectional view taken along line I-I' of FIG. 1.

Referring to FIGS. 1 to 3, the battery cell 10 according to an embodiment of the present disclosure may include a cell case 100 having a can accommodating an electrode assembly 110 therein, a cap plate 300 connected to the can, and a vent notch 400 formed on at least one of both surfaces of the cap plate 300, wherein the vent notch 400 may include at least one first notch portion 410 formed along a first path 411, at least one second notch portion 420 formed along a second path 421, and a connection notch portion 430 connecting the first notch portion 410 and the second notch portion 420.

Here, the battery cell 10 according to the present disclosure may be configured as a cylindrical cell, but an embodiment thereof is not limited thereto. In this disclosure, a battery cell 10 according to an embodiment will be described using a cylindrical cell as an example.

The cell case 100 may include a side wall 200 forming an accommodating space (S) therein, an end plate 210 provided at one end of the side wall 200 with both ends open and having a through-hole 210a formed therein, and a cap plate 300 provided at the other end of the side wall 200 and having an injection port 150 formed therein.

Here, the side wall 200 forming an accommodating space (S) therein, and the end plate 210 provided at one end of the side wall 200 with both ends open, and having a through-hole 210a formed therein may be refereed to as a can. That is, the cell case 100 may include a can forming the accommodating space (S) and a cap plate 300 connected to the can.

Here, the end plate 210 and the cap plate 300 may be configured to be coupled to both ends of the side wall 200 with both ends open, and at least one of the end plate 210 and the cap plate 300 may be integrally provided with the side wall 200.

In addition, the cell case 100 may have an injection port 140 provided in the end plate 210 or a through-hole 210a provided in the cap plate 300.

Here, the accommodating space (S) may be formed by the side wall 200 of the cell case 100 and the cap plate 300, and an electrode assembly 110 and an electrolyte may be accommodated in the accommodating space (S).

The side wall 200 may have a tube shape, and the end plate 210 may have a circular plate shape covering one side of the accommodating space (S).

The side wall 200 may have a circular tube shape. The end plate 210 may have an overall flat plate shape.

Here, thicknesses of the end plate 210 and the side wall 200 may vary. For example, the end plate 210 and the side wall 200 may have the same thicknesses, or the end plate 210 may have a thickness greater than that of the side wall 200.

The cell case 100 may include a metal material such as aluminum or an aluminum alloy, but an embodiment thereof is not limited thereto, and a material of the cell case 100 may be changed in various manners.

Meanwhile, a side wall 200 and an end plate 210 of the cell case 100 may be formed integrally.

For example, the side wall 200 and the end plate 210 may be manufactured into a shape formed integrally by deep drawing a metal sheet.

When the side wall 200 and the end plate 210 are formed integrally, a process of bonding the side wall 200 and the end plate 210 is not required, so the manufacturing of the cell case 100 and/or the battery cell 10 may be facilitated and workability may be improved.

However, the cell case 100 of the present disclosure is not limited to a configuration in which the side wall 200 and the end plate 210 are formed integrally, and the side wall 200 and the end plate 210 may be manufactured separately and then joined or bonded to each other by welding or the like.

The end plate 210 may include a through-hole 210a exposing an electrode terminal 140 connecting the electrode assembly 110 to the outside.

The through-hole 210a may be provided for the joining of the electrode terminal 140. The end plate 210 has a circular cross-sectional shape, and the through-hole 210a may be formed in a center of the end plate 210. In this case, the electrode terminal 140 joined to the through-hole 210a may be disposed in the center of the end plate 210.

The electrode terminal 140 may be joined to the through-hole 210a. At least a portion of the electrode terminal 140 may be exposed to the outside of the cell case 100. The electrode terminal 140 may pass through the through-hole 210a formed in the end plate 210 of the cell case 100, and at least a portion of the electrode terminal 140 may be exposed to the outside of the end plate 210.

Here, the electrode terminal 140 may be riveted to the through-hole 210a of the end plate 210. The electrode terminal 140 may be riveted to the end plate 210 while being inserted into the through-hole 210a of the end plate 210, and the electrode terminal 140 may be riveted to the end plate 210.

The electrode assembly 110 may be disposed in an accommodating space (S) of the cell case 100.

The electrode assembly 110 may include a positive electrode, a negative electrode, and a separator 113. One of the positive electrode and the negative electrode may correspond to a first electrode 111, and the other thereof may correspond to a second electrode 112.

The positive and negative electrodes may respectively include a current collector foil (or metal foil) and a composite layer applied to at least one surface of the current collector foil. The composite layer may include an active material. The separator 113 may be interposed between the positive and negative electrodes to electrically insulate the same.

The positive electrode, the negative electrode, and the separator 113 may be repeatedly disposed to form an electrode assembly 110.

As an example, the electrode assembly 110 may have a winding shape in which a positive electrode, a separator 113, and a negative electrode are stacked and wound. However, the electrode assembly 110 is not limited to a winding structure. For example, the electrode assembly 110 may also have a stacking shape, a zigzag-folding shape, or a stack-folding shape.

The electrode assembly 110 may include a first electrode 111 and a second electrode 112 having different polarities. For example, the first electrode 111 may serve as a positive electrode and the second electrode 112 may serve as a negative electrode, or vice versa.

The electrode assembly 110 may include a body in which a first electrode 111 and a second electrode 112 are arranged with a separator 113 interposed therebetween, and an electrode tab 114 extending from the first electrode 111 or the second electrode 112. The body may include a coating portion to which an active material is applied, and the electrode tab 114 may include a non-coating portion to which an active material is not applied. The electrode tab 114 may have a shape that is overlapped or bent in a certain shape.

The electrode tab 114 may include a first electrode tab 114a extending from the first electrode 111 and a second electrode tab 114b extending from the second electrode 112. The first electrode tab 114a may include a non-coated portion of the first electrode 111, and the second electrode tab 114b may include a non-coated portion of the second electrode 112.

The electrode assembly 110 may be connected to a current collector 120, and the current collector 120 may be welded to an electrode terminal 140 of the battery cell 10 and electrically connected to the electrode terminal 140.

The first electrode tab 114a may be electrically connected to the electrode terminal 140 via the current collector 120. The first electrode tab 114a may be electrically connected to the current collector 120. For example, the first electrode tab 114a and the current collector 120 may be electrically connected by being joined to each other, such as by welding. The current collector 120 may be electrically connected to the electrode terminal 140, such as by welding, or the like.

The second electrode tab 114b may be electrically connected to at least one of the cap plate 300 or the side wall 200. Although FIG. 3 illustrates that the second electrode tab 114b is directly electrically connected to the cap plate 300, a current collector may also be separately disposed between the second electrode tab 114b and the cap plate 300.

The electrode terminal 140 may be joined to the end plate 210, and may be electrically connected to the electrode assembly 110. The electrode terminal 140 may be joined to a through-hole 210a of the end plate 210. At least a portion of the electrode terminal 140 may be exposed to the outside of the end plate 210.

The electrode terminal 140 may be electrically connected to the electrode assembly 110. When the electrode terminal 140 is connected to the positive electrode of the electrode assembly 110, the electrode terminal 140 may correspond to a positive electrode terminal, and vice versa.

The electrode terminal 140 may be riveted to the through-hole 210a of the end plate 210. The electrode terminal 140 may be riveted to the end plate 210 while inserted into the through-hole 210a of the end plate 210. The electrode terminal 140 may be riveted to the end plate 210. The electrode terminal 140 may have an overall rivet shape.

To achieve insulation between the electrode terminal 140 and the end plate 210, a gasket 131 may be disposed between the electrode terminal 140 and the end plate 210. The gasket 131 may be disposed between the electrode terminal 140 and the through-hole 210a. The gasket 131 may include an electrically insulating material. The gasket 131 may serve as a sealing member sealing between the electrode terminal 140 and the end plate 210.

When riveting is performed on the electrode terminal 140 while a gasket 131 is disposed on the outside of the electrode terminal 140, the gasket 131 may be disposed between the electrode terminal 140 and the end plate 210. The gasket 131 may seal and/or insulate between the electrode terminal 140 and the end plate 210.

To achieve electrical insulation between the current collector 120 and the cell case 100, an electrically insulating member 130 may be disposed between the current collector 120 and the cell case 100. For example, the insulating member 130 may be disposed between the current collector 120 and the end plate 210. The shape and disposition of the insulating member 130 may be variously changed.

The injection port cover 160 may cover an injection port 150 formed on the cap plate 300. The injection port cover 160 may seal the injection port 150 after an electrolyte is injected into the can through the injection port 150. The injection port cover 160 may be joined to the cap plate 300 while covering the injection port 150. As an example, the injection port cover 160 may be welded to the cap plate 300. The injection port 150 may have a circular shape, and correspondingly, the injection port cover 160 may also have a circular cross-section.

The battery cell 10 according to an embodiment may include a cap plate 300 covering a bottom side of the accommodating space (S) of the cell case 100.

A battery cell 10 according to an embodiment may include a cap plate 300 covering a bottom side of an accommodating space (S) of the cell case 100. The cap plate 300 may be crimped or welded to the cell case 100.

The cap plate 300 may be joined to the side wall 200 on the opposite side of the electrode terminal 140 by crimping, welding, or the like, to cover the accommodating space (S). The cap plate 300 may include an injection port 150 for injecting an electrolyte into the interior of the cell case 100. The injection port 150 may be formed in a center of a body of the cap plate body, but a location and size thereof may vary. After electrolyte injection, the injection port 150 may be sealed with an injection port cover 160.

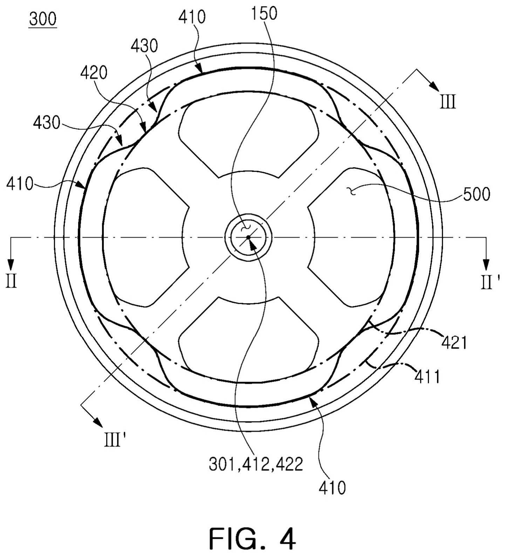

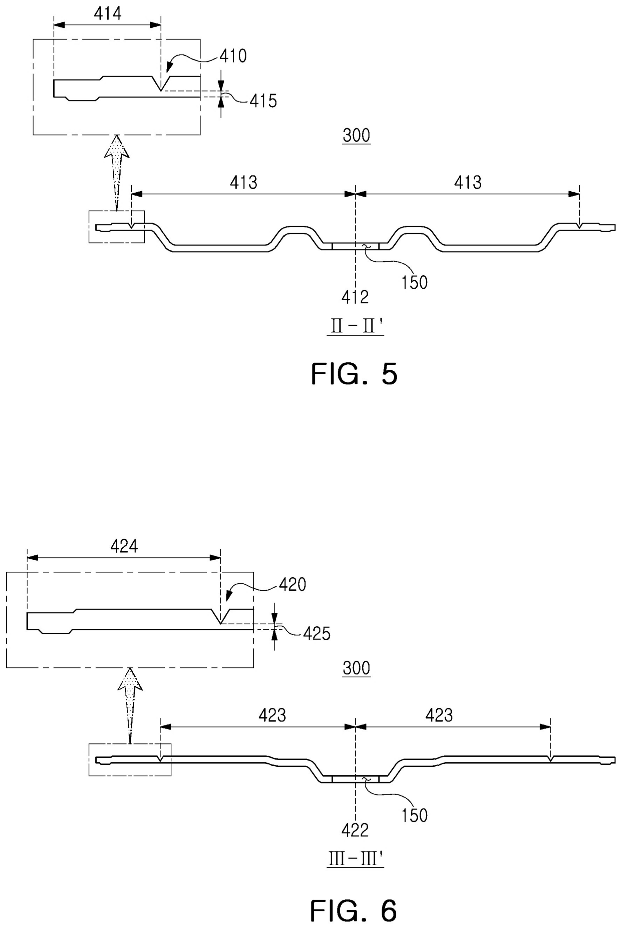

FIG. 4 is a plan view of a cap plate 300 according to an embodiment of the present disclosure, FIG. 5 is a cross-sectional view taken along line II-II' of a cap plate 300 according to an embodiment of the present disclosure, and FIG. 6 is a cross-sectional view taken along line III-III' of a cap plate 300 according to an embodiment of the present disclosure.

Referring to FIGS. 4 to 6, the cap plate 300 of the present disclosure may be formed to have a vent notch 400 including a first notch portion 410, a second notch portion 420, and a connection notch portion 430.

The first notch portion 410, the second notch portion 420, and the connection notch portion 430 may be grooves formed with thicknesses 415 and 425 thinner than the cap plate 300.

Therefore, when the cap plate 300 is deformed by internal pressure of the battery cell 10, the first notch portion 410, the second notch portion 420, and the connection notch portion 430 may rupture before other portions of the cap plate 300, thereby releasing internal gas, or the like of the battery cell 10 to lower the internal pressure.

Here, thicknesses of the first notch portion 410, the second notch portion 420, and the connection notch portion 430 may be provided to be approximately the same.

According to an embodiment of the present disclosure, the first notch portion 410, the second notch portion 420 are provided to have approximately the same thickness, but the order in which the first notch portion 410 and the second notch portion 420 are opened and the shape in which the first notch portion 410 and the second notch portion 420 are opened may be adjusted depending on the positions thereof.

The first notch portion 410 may be formed along a first path 411, and the second notch portion 420 may be formed along a second path 421.

The first path 411 may be provided to be spaced apart from the outside of the second path 421.

The connection notch portion 430 may connect one end of the first notch portion 410 and one end of the second notch portion 420, which are spaced apart from each other, and the connected first notch portion 410, second notch portion 420, and connection notch portion 430 may guide the opening of the vent notch 400.

Therefore, the first notch portion 410 and the second notch portion 420 may or may not overlap each other.

The first path 411 and the second path 421 may be provided to have different separation distances from a center 301 of the cap plate. That is, the first notch portion 410 along the first path 411 may be provided to be spaced apart from the center 301 of the cap plate by a first radius 413. In addition, the second notch portion 420 along the second path 421 may be provided to be spaced apart from the center 301 of the cap plate by a second radius 423.

In other words, the first path 411 and the second path 421 may be provided to have different separation distances from a connection portion between the cap plate 300 and the cap. More specifically, the first path 411 and the second path 421 may be provided to have different separation distances from the connection portion between the cap plate 300 and the side wall 200.

That is, the first notch portion 410 along the first path 411 may be provided to be spaced apart from a joint portion of the cap plate 300 and the side wall 200 by a first separation distance 414. In addition, the second notch portion 420 along the second path 421 may be provided to be spaced apart from the joint portion of the cap plate 300 and the side wall 200 by a second separation distance 424.

Here, the first path 411 may be a path formed along a virtual first circle, and the second path 421 may be a path formed along a virtual second circle.

In addition, the first radius 413 formed by the first circle followed by the first notch portion 410 and the second radius 423 formed by the second circle followed by the second notch portion 420 may be provided differently from each other.

For example, the first radius 413 of the first circle may be provided to be larger than the second radius 423 of the second circle. However, the present disclosure is not limited thereto, and the second radius 423 of the second circle may be provided to be larger than the first radius 413 of the first circle. Hereinafter, it is described on the premise that the first radius 413 of the first circle is provided to be larger than the second radius 423 of the second circle.

As described above, the vent notch 400 according to an embodiment of the present disclosure may be provided to have approximately the same thickness, but an opening position and an opening shape thereof may be adjusted according to the internal pressure by using the first notch portion 410 and the second notch portion 420 along different paths and the connection notch portion 430 connecting the first notch portion 410 and the second notch portion 420.

The cap plate 300 according to an embodiment of the present disclosure may include a forming portion 500 provided to protrude from one surface of the cap plate 300 to the other surface between the second notch portion 420 and the center 301 of the cap plate.

The cap plate 300 may include a forming portion 500 formed by being partially recessed.

In addition, a plurality of forming portions 500 may be provided, and the plurality of forming portions 500 may be disposed symmetrically with respect to the center 301 of the cap plate.

The cap plate 300 may enhance the rigidity of the cap plate 300, by having a forming portion 500.

The vent notch 400 according to an embodiment of the present disclosure may be provided so that the first notch portion 410, the second notch portion 420, and the connection notch portion 430 do not intersect or branch, and are continuously connected, thereby having the advantage of being easy to be manufactured.

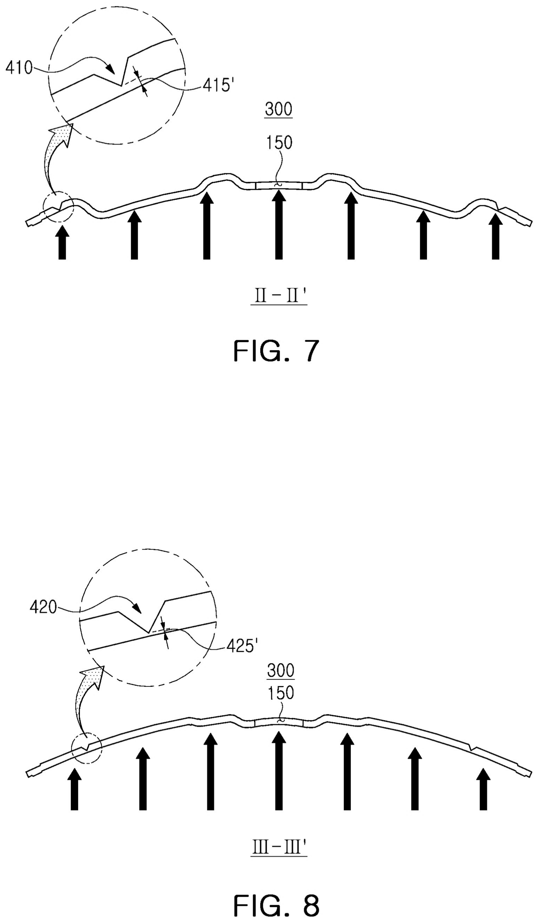

The contents of adjusting an opening position and an opening shape of the vent notch 400 according to the internal pressure may be described in more detail with reference to FIGS. 7 and 8.

FIG. 7 is a cross-sectional view taken along line II-II' of a cap plate 300 according to an embodiment of the present disclosure when gas is generated inside a battery cell 10, and FIG. 8 is a cross-sectional view taken along line III-III' of a cap plate 300 according to an embodiment of the present disclosure when gas is generated inside a battery cell 10.

Referring to FIGS. 7 to 8, along with FIGS. 4 to 6, when pressure is generated within the battery cell 10, force may be generated to push the cap plate 300 outwardly due to the internal pressure of the battery cell 10.

Here, an outer peripheral surface of the cap plate 300 is joined to the side wall 200, so that it can swell into a dome-like shape centered on the center 301 of the cap plate.

Due thereto, a difference in a height at which the first notch portion 410 and the second notch portion 420 increase may occur, and a difference in a degree of deformation thereof may occur.

More specifically, a deformation amount of the second notch portion 420 formed at a distance of the second radius 423 from the center of the cap plate 300 may be greater than that of the first notch portion 410 formed at a distance of the first radius 413 from the center of the cap plate 301.

Accordingly, even if the first notch portion 410 and the second notch portion 420 are provided to have the same thicknesses 415 and 425, the deformation amount of the second notch portion 420 may change more than that of the first notch portion 410, so that the second notch portion 420 may be ruptured first.

Here, the thickness of the first notch portion 410 may be referred to as a first thickness 415, and the thickness of the second notch portion 420 may be referred to as a second thickness 425.

According to an embodiment of the present disclosure, the vent notch 400 may change the shape in which the cap plate 300 is opened depending on the positions of the first notch portion 410 and the second notch portion 420 having different radii.

FIG. 7 is a cross-sectional view taken along line II-II' of a cap plate 300 according to an embodiment of the present disclosure when gas is generated inside a battery cell 10, and FIG. 8 is a cross-sectional view taken along line III-III' of a cap plate 300 according to an embodiment of the present disclosure when gas is generated inside a battery cell 10.

Referring to FIGS. 7 to 8, along with FIGS. 4 to 6, a cap plate 300 according to an embodiment of the present disclosure may have a first notch portion 410 and a second notch portion 420 disposed at different distances from the center 301 of the cap plate.

For example, the first notch portion 410 may be formed along a path of first circle, and the second notch portion 420 may be formed along a path of the second circle. In particular, the first circle 412 and the second center 422 may be approximately the same as the center 301 of the cap plate.

For example, a first notch portion 410 formed along the path of the first circle may be provided to be spaced apart from the center 301 of the cap plate by a first radius 413, and a second notch portion 420 formed along the path of the second circle may be provided to be spaced apart from the center 301 of the cap plate by a second radius 423.

Since the greatest change occurs at the center 301 of the cap plate, the deformation amount may decrease away from the center 301 of the cap plate.

That is, since the first notch portion 410 is disposed in a position, further away from the center 301 of the cap plate than the second notch portion 420, the second notch portion 420 may be deformed more, and a second thickness 425' of the second notch portion 420 may be thinner than a first thickness 415' of the first notch portion 410.

Here, the vent notch 400 may be provided so that at least a portion thereof opens in a different shape than other portions thereof depending on a magnitude of the change in preset pressure.

First, when internal pressure of the battery cell 10 exceeds a preset pressure, the second notch portion 420 may be ruptured before the first notch portion 410.

The second notch portion 420 may be ruptured and opened first, so that internal gas of the battery cell 10 may be discharged and the pressure may be lowered, and a deformation amount of the first notch portion 410 and the second notch portion 420 may be reduced so that the first notch portion 410 and the second notch portion 420 may no longer be ruptured.

Meanwhile, in a situation in which gas is generated rapidly, such as a thermal runaway, the first notch portion 410, the second notch portion 420, and the connection notch portion 430 may all be ruptured due to a very rapid pressure change. Due thereto, a portion of the cap plate 300 which is surrounded by the first notch portion 410, the second notch portion 420, and the connection notch portion 430 may be detached, causing the internal pressure of the battery cell 10 to rapidly decrease.

Likewise, the first notch portion 410 along the first path 411 may be formed to have a different separation distance from a joint portion of the cap plate 300 and the side wall 200 than the second notch portion 420 along the second path 421.

Since the greatest change occurs in the center 301 of the cap plate, a deformation amount of the vent notch 400 may increase from the joint portion of the cap plate 300 and the side wall 200 toward the center 301 of the cap plate.

That is, since the second notch portion 420 is disposed in a position, further away from the joint portion of the cap plate 300 and the side wall 200 than the first notch portion 410, the second notch portion 420 may be deformed more, and the second thickness 425' of the second notch portion 420 may be thinner than the first thickness 415' of the first notch portion 410.

Therefore, when the internal pressure of the battery cell 10 exceeds the preset pressure, the second notch portion 420 may be ruptured before the first notch portion 410.

The second notch portion 420 may be ruptured and opened first, so that the internal gas of the battery cell 10 may be discharged and the pressure may be lowered, and the deformation amount of the first notch portion 410 and the second notch portion 420 may be reduced so that the first notch portion 410 and the second notch portion 420 may no longer be ruptured.

Meanwhile, in a situation in which gas is generated rapidly, such as a thermal runaway, the first notch portion 410, the second notch portion 420, and the connection notch portion 430 may all be ruptured due to a very rapid pressure change. Due thereto, as a portion of the cap plate 300, surrounded by the first notch portion 410, the second notch portion 420, and the connection notch portion 430 may be detached, causing the internal pressure of the battery cell 10 to rapidly decrease.

Referring again to FIG. 4, a length of the second notch portion 420 may be provided to be shorter than a length of the first notch portion 410.

More specifically, the length of the second notch portion 420 along the second path 421 may be formed to be shorter than the length of the first notch portion 410 along the first path 411. In addition, the length of the first notch portion 410 along the first path 411 may be formed to be equal to or greater than 10 percent of the length of the vent notch 400.

According to the purpose of the present disclosure, even if the vent notch 400 is formed to have approximately the same depth, the opening shape may be formed differently, depending on the difference between the first path 411 and the second path 421 of the vent notch 400.

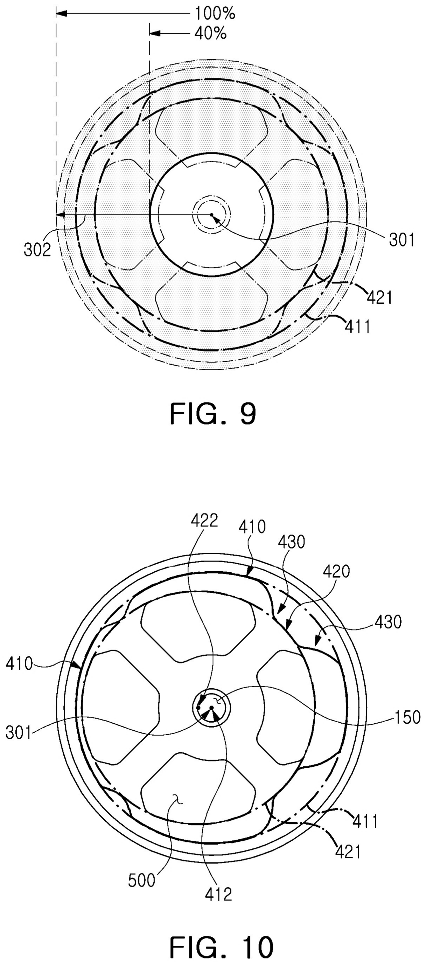

FIG. 9 is a diagram exemplarily illustrating a region in which a first path 411 and a second path 421 are formed according to an embodiment of the present disclosure.

Referring to FIG. 9, a first notch portion 410 and a second notch portion 420 may be formed in a region of the cap plate 300, which is larger than 40 percent of a radius 302 of the cap plate, and smaller than the radius of the cap plate 300.

That is, the first notch portion 410, the second notch portion 420, and the connection notch portion 430 may be provided in a region of the cap plate, which is from 40% or more of the radius 302 of the cap plate to within the radius of the cap plate 300.

When the internal pressure of the battery cell 10 increases, the cap plate 300 may expand into an oval shape.

More specifically, the cap plate 300 may expand into an elliptical shape having a major axis, which is a diameter between the joint portion of the cap plate 300 and the side wall 200 and a minor axis of twice a height of the center 301 of the cap plate, having been increased due to the internal pressure of the battery cell 10.

That is, even if the first notch portion 410 along the first path 411 and the second notch portion 420 along the second path 421 are provided to have the same separation distances, a difference in the deformation amount may be reduced as the first notch portion 410 and the second notch portion 420 are closer to the center 301 of the cap plate.

Due thereto, the vent notch 400 does not have the effect of mildly lowering the internal pressure of the battery cell 10 because the second notch portion 420 of the vent notch 400 is ruptured first, and the first notch portion 410 and the second notch portion 420 of the vent notch 400 may be ruptured simultaneously.

Accordingly, the first path 411 and the second path 421 may be formed in a range formed in a region, which is larger than 40 percent of the radius 302 of the cap plate and smaller than the radius of the cap plate 300, so that the second notch portion 420 may be ruptured before the first notch portion 410 by using the difference in the deformation amount of the first path 411 and the second path 421 under preset pressure conditions, and in a situation in which thermal runaway occurs, the first notch portion 410 and the second notch portion 420 may be ruptured simultaneously due to a sudden pressure difference.

FIG. 10 is a plan view of a cap plate 300 according to an embodiment of the present disclosure.

Referring to FIG. 10, the cap plate 300 according to an embodiment of the present disclosure may have centers of a first circle forming a first path 411 and a second circle forming a second path 421, which are different from each other.

Due thereto, compared to the case in which a first notch portion 410 and a second notch portion 420 are provided be provided to have the same centers, the first notch portion 410 and the second notch portion 420 may have a difference in a distance from a center 301 of the cap plate depending on positions thereof.

In other words, the first notch portion 410 and the second notch portion 420 are formed along the first and second circles having different centers, so that a gap between the first notch portion 410 and a second notch portion 420 may change depending on the positions.

When internal pressure of the battery cell 10 increases, as the gap between the first notch portion 410 and the second notch portion 420 increases, a difference in an increasing height of the first notch portion 410 and the second notch portion 420, i.e., a deformation amount thereof may increase, and the second notch portion 420 at the point with the large gap may be ruptured first.

That is, when the internal pressure of the battery cell 10 increases, a position or direction of the second notch portion 420 being ruptured may be roughly set, by adjusting the positions of the centers of the first notch portion 410 and the second notch portion 420.

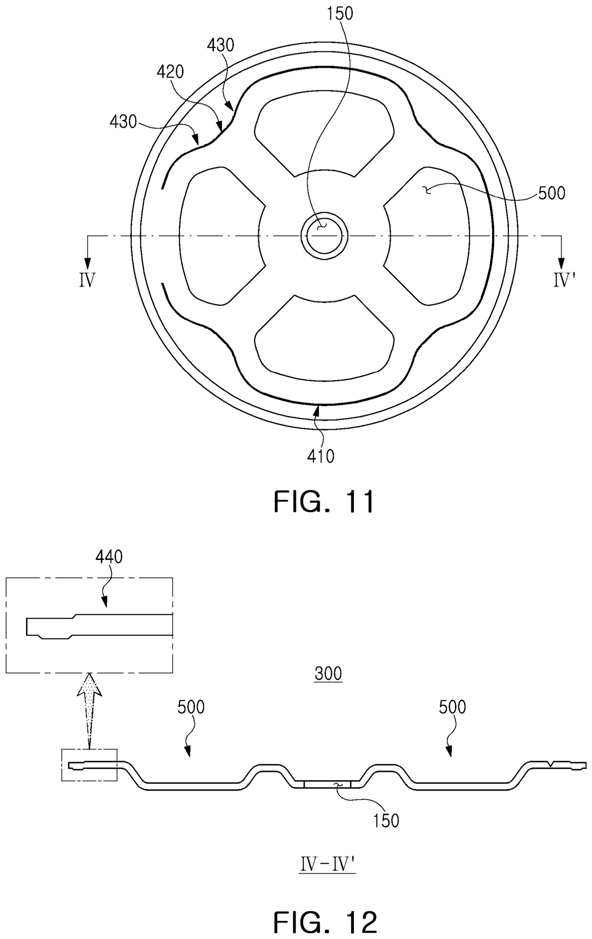

FIG. 11 is a plan view of a cap plate 300 according to an embodiment of the present disclosure, and FIG. 12 is a cross-sectional view taken along line IV-IV' of a cap plate 300 according to an embodiment of the present disclosure.

Referring to FIGS. 11 and 12, the cap plate 300 according to an embodiment of the present disclosure may include a holding portion 440, provided to be thicker than that of a first notch portion 410 and the second notch portion 420 in at least one portion of the first notch portion 410 and the second notch portion 420.

That is, since the cap plate 300 includes a holding portion 440, even if the vent notch 400 is completely ruptured due to thermal runaway, or the like, a portion of the cap plate 300 may not completely be detached, and may be connected to the cap plate 300 by the holding portion 440.

Due thereto, a portion of the cap plate 300 may be completely opened by the vent notch 400, thereby reducing the internal pressure, while preventing problems such as damage that may occur due to collision between the detached portion of the cap plate 300 and other parts.

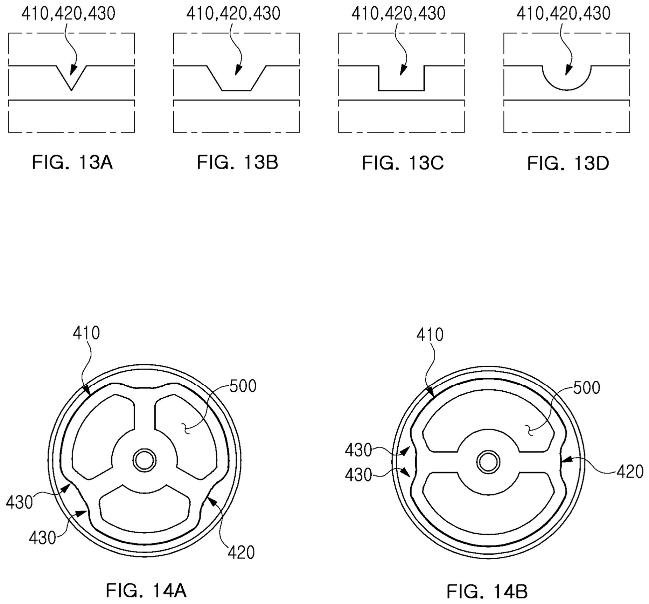

FIGS. 13A, 13B, 13C and 13D are diagrams exemplarily illustrating cross-sections of various shapes of vent notches 400 according to an embodiment of the present disclosure, and FIGS. 14A and 14B are diagrams exemplarily illustrating shapes of various shapes of vent notches 400 according to an embodiment of the present disclosure.

Referring to FIGS. 13A, 13B, 13C and 13D, the vent notch 400 according to an embodiment of the present disclosure may be provided in various shapes, such as a "v" shape, a trapezoidal shape, a square shape, a "U" shape, or the like.

In addition, the vent notch 400 according to an embodiment of the present disclosure may be formed through a press process or by cutting using a laser.

Referring to FIGS. 14A and 14B, the vent notch 400 according to an embodiment of the present disclosure may be formed to have various shapes.

For example, as exemplarily illustrated in FIG. 14A, the vent notch 400 may be comprised of three first notch portions 410, three second notch portions 420, and a connection notch portion 430 connecting the first notch portions 410 and the second notch portions 420.

In addition, as exemplarily illustrated in FIG. 14B, the vent notch 400 may be comprised of two first notch portions 410, two second notch portions 420, and a connection notch portion 430 connecting the first notch portions 410 and the second notch portions 420.

In order to ensure uniform rupture, it is preferable that the first notch portion 410 and the second notch portion 420 be provided in a symmetrical structure with respect to the center 301 of the cap plate, but the present disclosure is not limited thereto and may be provided to have various shapes.

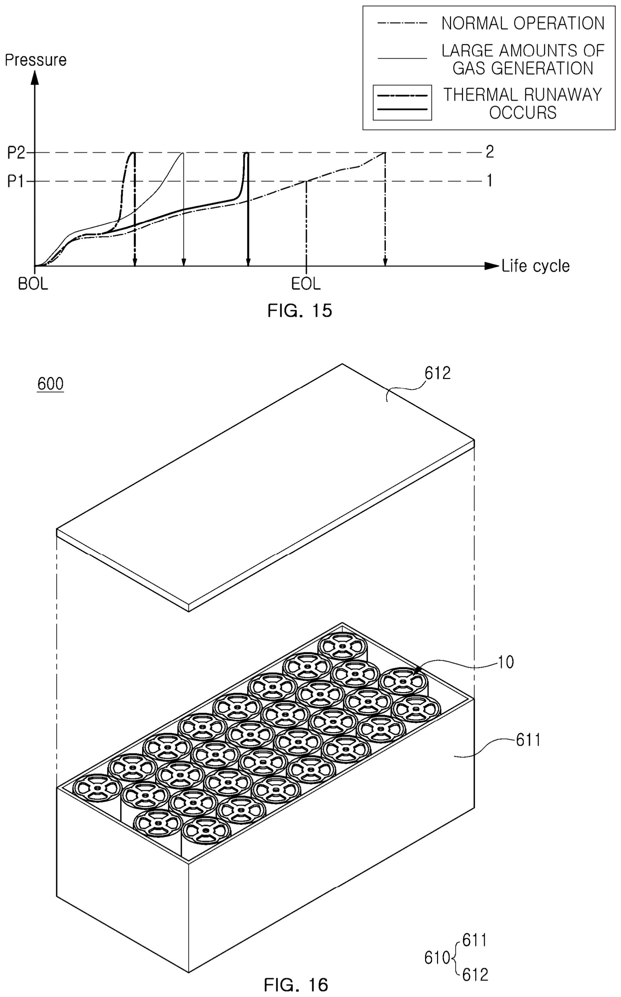

FIG. 15 is a graph illustrating a change in pressure of a battery cell 10 depending on an operating state according to an embodiment of the present disclosure.

Referring to FIG. 15, even under normal conditions, pressure of the battery cell 10 may begin to increase from a beginning of life (BOL). When the battery cell 10 continues to be used past the end of the life, ruptured pressure P2 of a vent notch 400 may be reached, and the vent notch 400 may then open, causing the pressure to decrease again.

Even in a non-thermal runaway state, large amounts of gas can be generated. Even in this case, the vent notch 400 according to an embodiment of the present disclosure may be opened to lower the internal pressure of the battery cell 10.

More specifically, when the ruptured pressure P2 of the vent notch 400 is reached in a normal state or a non-thermal runaway state, the second notch portion 420 may be opened to lower the pressure of the battery cell 10.

Here, the point in time at which the pressure of the battery cell 10 reaches a maximum operating pressure P1 may be an end of life (EOL) of the battery cell 10.

Meanwhile, in the thermal runaway state, a rate of increase in the internal pressure of the battery cell 10 may increase rapidly, and the battery cell 10 according to an embodiment of the present disclosure may include not only the second notch portion 420 but also the first notch portion 410, so that the vent notch 400 may be opened entirely, thereby lowering the internal pressure as quickly as possible in response to the rapid change in internal pressure.

The battery cell 10 according to the present disclosure has an advantage in that, even if a depth of the vent notch 400 is formed to be approximately the same, the vent notch 400 may be formed along two different paths in an intersecting manner, thereby allowing the shape of the vent notch 400 to be adaptively opened to changes in the internal pressure of the battery cell 10 to be different.

FIG. 16 is a perspective view of a battery module 600 according to an embodiment of the present disclosure.

Referring to FIG. 16, the battery module 600 according to an embodiment may include a plurality of battery cells 10 and a module housing 610 accommodating the plurality of battery cells 10.

The battery cell 10 provided in the battery module 600 may be applied with at least one of the battery cells 10 described with reference to FIGS. 1 to 14.

A specific type of the battery module 600 of the present disclosure is not limited as long as the battery module 600 includes a plurality of battery cells 10.

For example, the battery module 600 of the present disclosure is defined as including a battery pack, an energy storage device, or the like.

The plurality of battery cells 10 may be accommodated in a module housing 610.

The module housing 610 may provide a space for accommodating a plurality of battery cells 10. The module housing 610 may include a housing body 611 forming a space for accommodating a plurality of battery cells 10, and a housing cover 612 covering upper sides of the plurality of battery cells 10.

As set forth above, according to embodiments of the present disclosure, a battery cell and a battery module including the same may have an improved vent notch, so that vent performance of the battery cell and the battery module including the same, may be improved.

According to an embodiment of the present disclosure, an opening shape of the vent notch may change in response to a magnitude of a change in internal pressure of the battery cell.

According to an embodiment of the present disclosure, an opening size of the cap plate by the vent notch may be adjusted, in response to the magnitude of the change in the internal pressure of the battery cell by the shape of the vent notch.

The present disclosure also relates to the following aspects.

Aspect 1) A battery cell, comprising: a cell case having a can accommodating an electrode assembly therein, and a cap plate connected to the can; and a vent notch formed in at least one of both surfaces of the cap plate, wherein the vent notch includes, at least one first notch portion formed based on a first path; at least one second notch portion formed based on a second path; and a connection notch portion connecting the first notch portion and the second notch portion.

Aspect 2) The battery cell of aspect 1, wherein the first path is provided to be spaced apart from the outside of the second path.

Aspect 3) The battery cell of aspect 1 or 2, wherein the first path and the second path are provided to have different separation distances from a center of the cap plate.

Aspect 4) The battery cell of any one of aspects 1 to 3, wherein the first path and the second path are provided to have different separation distances from a connection portion of the cap plate and the can.

Aspect 5) The battery cell of any one of aspects 1 to 4, wherein the first path is a path formed along a virtual first circle, and the second path is a path formed along a virtual second circle.

Aspect 6) The battery cell of aspect 5, wherein a first radius of the first circle is provided to be larger than a second radius of the second circle.

Aspect 7) The battery cell of aspect 5 or 6, wherein a first center of the first circle and a second center of the second circle are provided to be the same.

Aspect 8) The battery cell of any one of aspects 1 to 7, wherein the first notch portion and the second notch portion are formed in a region of the cap plate, which is larger than 40 percent of a radius of the cap plate, and smaller than the radius of the cap plate.

Aspect 9) The battery cell of any one of aspects 1 to 8, wherein a length of the second notch portion is provided to be shorter than a length of the first notch portion.

Aspect 10) The battery cell of any one of aspects 1 to 9, wherein the cap plate includes an injection port for injecting an electrolyte into the interior of the cell case.

Aspect 11) The battery cell of any one of aspects 1 to 10, wherein the cap plate includes a forming portion formed by being partially recessed.

Aspect 12) The battery cell of aspect 11, wherein the forming portion is provided in plural, and the plurality of forming portions are disposed symmetrically with respect to the center of the cap plate.

Aspect 13) The battery cell of any one of aspects 1 to 12, wherein the vent notch is provided so that at least a portion thereof opens in a different shape than other portions thereof based on a magnitude of a change in preset pressure.

Aspect 14) The battery cell of aspect 13, wherein in the vent notch, the second notch portion is ruptured before the first notch portion.

Aspect 15) The battery cell of any one of aspects 1 to 14, wherein the cap plate includes a holding portion provided to be thicker than the first notch portion and the second notch portion in a portion of at least one of the first notch portion and the second notch portion.

Aspect 16) A battery module, comprising: a plurality of battery cells; and a module housing accommodating the plurality of battery cells, wherein at least one of the plurality of battery cells includes, a cell case having a side wall forming an accommodating space for accommodating an electrode assembly therein, and a cap plate connected to one side of the side wall; and a vent notch formed in at least one of both surfaces of the cap plate, wherein the vent notch includes, at least one first notch portion formed based on a first path; at least one second notch portion formed based on a second path; and a connection notch connecting the first notch portion and the second notch portion.

## Claims

1. A battery cell, comprising:
a cell case having a can accommodating an electrode assembly therein, and a cap plate connected to the can; and
a vent notch formed in at least one of both surfaces of the cap plate,
wherein the vent notch includes
at least one first notch portion formed based on a first path;
at least one second notch portion formed based on a second path; and
a connection notch portion connecting the first notch portion and the second notch portion.

2. The battery cell of claim 1, wherein the first path is provided to be spaced apart from the outside of the second path.

3. The battery cell of claim 1 or 2, wherein the first path and the second path are provided to have different separation distances from a center of the cap plate.

4. The battery cell of any one of claims 1 to 3, wherein the first path and the second path are provided to have different separation distances from a connection portion of the cap plate and the can.

5. The battery cell of any one of claims 1 to 4, wherein the first path is a path formed along a virtual first circle, and the second path is a path formed along a virtual second circle.

6. The battery cell of claim 5, wherein a first radius of the first circle is provided to be larger than a second radius of the second circle.

7. The battery cell of claim 5 or 6, wherein a first center of the first circle and a second center of the second circle are provided to be the same.

8. The battery cell of any one of claims 1 to 7, wherein the first notch portion and the second notch portion are formed in a region of the cap plate, which is larger than 40 percent of a radius of the cap plate, and smaller than the radius of the cap plate.

9. The battery cell of any one of claims 1 to 8, wherein a length of the second notch portion is provided to be shorter than a length of the first notch portion.

10. The battery cell of any one of claims 1 to 9, wherein the cap plate includes an injection port for injecting an electrolyte into the interior of the cell case.

11. The battery cell of any one of claims 1 to 10, wherein the cap plate includes a forming portion formed by being partially recessed.

12. The battery cell of claim 11, wherein the forming portion is provided in plural, and the plurality of forming portions are disposed symmetrically with respect to the center of the cap plate.

13. The battery cell of any one of claims 1 to 12, wherein the vent notch is provided so that at least a portion thereof opens in a different shape than other portions thereof based on a magnitude of a change in preset pressure,
wherein in the vent notch, the second notch portion is ruptured before the first notch portion.

14. The battery cell of claim 1, wherein the cap plate includes a holding portion provided to be thicker than the first notch portion and the second notch portion in a portion of at least one of the first notch portion and the second notch portion.

15. A battery module, comprising:
a plurality of battery cells; and
a module housing accommodating the plurality of battery cells,
wherein at least one of the plurality of battery cells includes
a cell case having a side wall forming an accommodating space for accommodating an electrode assembly therein, and a cap plate connected to one side of the side wall; and
a vent notch formed in at least one of both surfaces of the cap plate,
wherein the vent notch includes
at least one first notch portion formed based on a first path;
at least one second notch portion formed based on a second path; and
a connection notch connecting the first notch portion and the second notch portion.
